(19)

Europäisches
Patentamt
European
Patent Office
Office européen
des brevets

(11) **EP 2 338 592 A1**

(12) **EUROPEAN PATENT APPLICATION**

(43) Date of publication:
**29.06.2011 Bulletin 2011/26**

(51) Int Cl.:
*B01J 23/75* (2006.01)       *B01J 35/06* (2006.01)
*B01J 37/02* (2006.01)       *C07C 1/04* (2006.01)
*C10G 2/00* (2006.01)

(21) Application number: **09179424.8**

(22) Date of filing: **16.12.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Shell Internationale Research
Maatschappij B.V.
2596 HR The Hague (NL)**

(72) Inventors:
• **Boumendjel, Nariman
  1031HW Amsterdam (NL)**

• **Dekker, Desmond Marinus Cornelis
  1031HW Amsterdam (NL)**
• **Lefering, Anton Jacobus Egbertus
  1031HW Amsterdam (NL)**
• **Niesen, Gerardus Petrus Lambertus
  1031HW Amsterdam (NL)**

(74) Representative: **Matthezing, Robert Maarten
  Shell International B.V.
  Intellectual Property Services
  P.O. Box 384
  2501 CJ The Hague (NL)**

(54) **Process for manufacturing a catalyst substrate comprising non-woven fibers**

(57)     The present invention pertains to a process for manufacturing a coated fibrous aggregate comprising the steps of providing fibers into a mould to form a fibrous aggregate, the fibers having an average length in the range of 4-50 mm, an average diameter in the range of 5-300 microns, and a length over diameter ratio in the range of 50 to 500, providing an oxide or a precursor therefor to the fibrous aggregate, subjecting the coated fibrous aggregate to a drying step, and removing the coated fibrous aggregate from the mould. Where the coated fibrous aggregate contains a catalytic component or a precursor therefor, it may be indicated herein as a catalyst. Where the coated fibrous aggregate does not contain a catalytic component or a precursor therefor, it may be indicated herein as catalyst substrate. Coated fibrous aggregates and their use as catalysts or catalyst substrate for diffusion-limited reactions are also claimed.

EP 2 338 592 A1

**Description**

This invention relates to a process for manufacturing a catalyst or a catalyst substrate, to a catalyst, to a catalyst substrate and to the use of the catalyst, in particular in diffusion-limited reactions including the Fischer-Tropsch reaction.

Many catalytic reactions are mass transfer-limited. For these reactions it is important that the reaction components have easy access to the catalytic sites, and that the reaction products can easily be removed from the catalytic sites. For these types of reactions catalyst accessibility is of prime importance.

For example for Fisher-Tropsch reactions, catalysts have been used based on porous substrates. W02006/037776 describes the use of woven or non-woven metal structures in the shape of blankets, and porous catalyst elements based on gauze, spronge, foam, foil constructs, mesh, or webbing material.

It has been found that the wire structures used as catalyst substrate known in the art have disadvantages. They are difficult to obtain in different shapes, and depending on the nature of the material, they may be quite costly. For example, a substrate based on drawn wires is quite expensive due to the high cost of the starting material.

There is therefore a need for a process for manufacturing a catalyst substrate and a catalyst which allows the use of relatively inexpensive starting materials, which allows manufacturing catalysts and substrates in different shapes, and which provides catalysts and substrates with adequate strength and good porosity characteristics. There is also need for catalysts and catalyst substrates which combines good porosity characteristics with ease of manufacture, and availability of different shapes.

The present invention solves these problems.

According to a first aspect of the present invention there is provided a process for manufacturing a coated fibrous aggregate comprising the steps of providing fibers into a mould to form a fibrous aggregate, the fibers having an average length in the range of 4-50 mm, an average diameter in the range of 5-300 microns, and a length over diameter ratio in the range of 50 to 500, providing an oxide or a precursor therefor to the fibrous aggregate, subjecting the coated fibrous aggregate to a drying step, and removing the coated fibrous aggregate from the mould.

According to a second aspect of the present invention there is provided a coated fibrous substrate comprising non-woven fibers with an average length in the range of 4-50 mm, an average diameter in the range of 5-300 microns, and a length over diameter ratio in the range of 50 to 500, wherein the fibers are adhered to each other via an oxidic component or a precursor therefor.

Where the coated fibrous aggregate contains a catalytic component or a precursor therefor, it may be indicated herein as a catalyst. Where the coated fibrous aggregate does not contain a catalytic component or a precursor therefor, it may be indicated herein as catalyst substrate.

The present invention and its advantages will be described in more detail below, as will be further aspects of the invention.

In the first step in the process according to the invention, fibers are provided into a mould to form a fibrous aggregate. In the context of the present specification a fibrous aggregate refers to an aggregate of loose fibers which have not been purposefully made to adhere to each other.

The fibers used in the present invention have an average length in the range of 4-50 mm. If the average length of the fibers is below 4 mm, the strength of the substrate will be detrimentally affected. If the average length of the fibers is above 50 mm, it will become more difficult to prepare a system with an appropriate structure. In one embodiment, the fibers have an average length of at least 8 mm, more in particular at least 10 mm. In one embodiment, the fibers have an average length of at most 40 mm, more in particular at most 30 mm.

The fiber length is the shortest distance between the two terminal ends of the fiber (as opposed to the length of the fiber from one end to the other along the length of the fiber body). The fiber length can be determined visually, where necessary with a microscope or other magnifying apparatus, or using measuring apparatus known in the art, such as a slide caliper. The average fiber length is calculated from the length of a random sample of 100 fibers.

As the presence of small fibers may detrimentally affect the properties of the substrate, it may be preferred for less than 10%, determined by number, of the fibers in the substrate to have a length below 4 mm. More in particular it may be preferred for less than 5%, determined by number, of the fibers in the substrate to have a length below 4 mm, or even less than 2%.

In one embodiment, the difference in length between the fibers is relatively small. This is because this will ensure a more homogeneous structure. Therefore, in one embodiment it is preferred for at least 50% by number of the fibers to have a length within 20% of the average fiber length. More in particular, it may be preferred for at least 70% by number of the fibers to have a length within 20% of the average fiber length, or at least 80%, or even at least 90%.

The fibers have an average diameter in the range of 5-300 microns. If the average diameter is too low, the strength of the structure will be detrimentally affected. On the other hand, above a certain value increase of the diameter will not contribute to the properties of the shaped porous structure, but will continue to the weight and the costs. The average diameter is calculated from the average length, determined as described above, and the density of the material from which the fibers are prepared, assuming that the fibers have a cylindrical shape.

In one embodiment, the average diameter of the fibers is at least 20 microns, more in particular at least 25 microns, still more in particular at least 50 microns. In one embodiment, the average diameter of the fibers is at most 250 microns, more in particular at most 150 microns.

The fibers have a length over diameter ratio in the range of 50-500. This value, which will also be indicated as the aspect ratio, is defined as the average length, as defined above, divided by the average diameter, as defined above. If the aspect ratio is too low, the strength of the substrate will be insufficient. If the aspect ratio if too high, the strength of the substrate will also be insufficient. In one embodiment, the fibers have an aspect ratio of at least 75, more in particular at least 100. In one embodiment, the fibers have an aspect ratio of at most 350, more in particular at most 300.

The nature of the fibers used in the present invention may depend on the nature of the catalyst to be based on the substrate. Obviously, the fibers should be such that the substrate will not disintegrate under the conditions in which the catalyst will be used. Examples of suitable materials include rock wool, glass fibers, and fibers of metal or metal alloy. Fibers of metal or metal alloy may be preferred. In one embodiment, the fibers will comprise stainless steel, such as stainless steel AISI 310, AISI 316, or AISI 430. In other embodiments, the fibers are, for example, of iron, copper, nickel, molybdenum, and/or aluminium. In one embodiment, the nature of the fibers is selected to contribute to the catalytic activity of the final catalyst. This will be elucidated in more detail below.

In one embodiment, the fibers have a relatively rough surface structure, e.g., on the microscopic scale. This makes for improved adhesion of the catalytic component to the fibers. The surface roughness, expressed in percent, is the measured circumference of the fiber divided by the calculated circumference of the fiber, wherein the calculated circumference is n * the average diameter of the fibers.

The circumference of the fiber may be determined, for example, using an optical method. The fibers are embedded in a resin and coupes are prepared therefrom over the cross-section of the fibers. The circumference of the fiber may then be determined using conventional microscopical methods, e.g., line measurement by hand or via appropriate software. To increase the accuracy of the method it is recommended to measure the circumference of a number of fiber cross-sections, e.g., 10, 20, or 50, and to calculate the average measured circumference therefrom.

In one embodiment of the present invention, the surface roughness is at least 105%. It may be preferred for the surface roughness to be at least 110%. In some embodiments, the surface roughness may be at least 115%, or even at least 120%. While the upper limit of the surface roughness is not critical to this embodiment of the present invention, a value of at most 200% may be mentioned as a general value.

In one embodiment, the fibers are rapidly solidified metal fibers. It has been found that these fibers combine a suitable surface roughness with suitable length, diameter, and aspect ratio requirements.

Rapidly solidified metal fibers are known in the art. They are produced for example via a process in which a rotating wheel is brought into contact with liquid metal, for example by plunging it into a pool of molten metal or contacting it with the molten tip of a metal rod. The wheel is wetted by the liquid metal. The fibers separate from the wheel through centrifugal forces. Methods for manufacturing metal fibers through rapid solidification processes are known in the art. They are for example described in US5,027,886, DE19711764, and DE10000097. The rapid solidification process can take place in an inert gas environment or in a non-inert environment, e.g., in air. Suitable rapidly solidified metal fibers can be obtained commercially from, int. al., Fraunhofer and Fibretech.

In providing the fibers to the mould to form a fibrous aggregate, care should be taken of the following. In the first place, the fibers should not adhere to each other, or only to a limited extent. Otherwise, it will be difficult to effect proper process control. For example, dosing will be difficult, which may results in inadequate density control. Further, when aggregated fibers are provided to the mould, this may result in the formation of an inhomogeneous structure.

If necessary, the fibers may thus be subjected to a deaggregation step before they are brought into the mould. A deaggregation step may encompass, for example, deaggregating the fibers using steel brushes, or providing the fibres to the mould through a vibrating sieve. Other suitable methods will be evident to the skilled person.

Care should also be taken to ensure that the fibers in the mould are not oriented overmuch in the same direction, as this may result in a catalyst substrate with a too high density and insufficient strength.

That the fibers are not overmuch oriented in the mould can be ensured by a number of measures. In the first place, the fiber length should be selected appropriately as the presence of too long fibers will favour orientation occurring. Further, the length which the fibers have to travel when they are provided to the mould should not be too long, as a too high dropping length will favour orientation occurring. Further the density of the dropping fibers should be not too high, as a too high density will favour orientation of the fibers in the fibrous aggregate.

With the above guidelines the skilled person will be able to select a method for providing the fibers into a mould to form a fibrous aggregate.

To facilitate adhesion of oxidic material or the precursor therefor, the fibers can be cleaned and roughened before application of the oxide (precursor), especially when the fibers comprise metal. This is preferably done before the fibers are converted into the fibrous aggregate.

An advantage of the process according to the invention is that the size and shape of the mould can be selected to obtain a shaped porous structure which is tailored to a specific use.

For example, the size and shape of the mould can be selected so that a catalyst or catalyst substrate is formed which has a shape fitted to the unit in which it will be used. For example, it may be tailored to encompass spaces for heating or cooling pipes, or it may be tailored to take into account curvature of the reactor.

The size and shape of the mould may also be selected to form catalysts or substrates in the shape of mats or mattresses, spheres, cylinders, cubes, blocks, pyramids, donuts, or irregular shapes, for example for use in fixed bed or moving bed applications. The use of spheres may sometimes be preferred as these show high attrition resistance. The use of cylinders may sometimes be preferred for reasons of processing efficiency.

The coated fibrous aggregate as it is removed from the mould may have the final shape for the catalyst as it will be used. It is also possible, however, for the substrate as it is removed from the mould to be subjected to a further shaping step.

For example, in one embodiment, the mould is an endless belt which is provided with the fibers to form a fibrous aggregate. The fibers are then coated and dried, as will be discussed below, and if necessary the dried coated substrate is cut into the desired shapes. Cutting is not always necessary, however. For example, it is possible to manufacture individual mats by stopping and then restarting the provision of fibers onto the endless belt.

The next step in the process according to the invention is providing an oxide or a precursor therefor to the fibrous aggregate.

The oxide may be any oxide suitable for use in catalytic applications, whether as active component, as adhesive component, or as carrier component. Examples of suitable oxides include silica, alumina, titania, zirconia, gallia, ceria, oxidic components such as molecular sieves, and oxides of the non-noble metals of Group VIII of the periodic table of elements (CAS Version), more in particular iron, cobalt, and nickel, oxides of metals of Group VIB of the periodic table of elements, more in particular chromium, molybdenum, and tungsten, and oxides of metals of Group VIIB of the periodic table of elements, more in particular manganese. Precursors of oxides are compounds which will be converted into oxides under calcination conditions, e.g., at a temperature of 300-1100C in the presence of oxygen. Examples of suitable precurors include salts and hydroxides. Suitable precursors will be discussed in more detail below.

As will be elucidated in more detail below, oxides and precursors may be used in all kinds of combinations.

The oxide or precursor therefore may be applied to the fibrous aggregate in the form of a solution or dispersion in a liquid medium. Preferably, a solution or dispersion in an aqueous medium is used. The liquid medium may be applied by pouring it into the mould, by spray it, or by any other method which ensures adequate coverage of the fibrous aggregate with the oxide or a precursor therefor. Suitable methods will be clear to the skilled person.

As indicated above, suitable oxidic materials include the oxides known in the art as carrier material for catalysts, such as alumina, silica, titania, zirconia, gallia, cesia, and mixtures and combinations thereof such as silica-alumina, etc. These oxides may further be indicated as carrier oxides, although the term should not be interpreted as limiting.

Suitable precursors for carrier oxides are known in the art and include salts or (hydr)oxides. For example, a solution or dispersion may be used comprising one or more salts or (hydr)oxides of silicon, zirconium, gallium, cesium, titanium, or aluminium, e.g., aluminium trihydrate, aluminium monohydrate, silicilic acid, titanium lactate, or an ammonium salt of lactic acid titanate chelate, such as Tyzor® obtainable from DuPont.

The use of the combination of a first type of oxidic material in combination with a precursor for a second type of oxidic material is also envisaged. For example, a dispersion may be used comprising a particulate oxidic material, e.g., alumina, silica, titania, or silica-alumina, in combination with a precursor which acts as adhesive for the particulate oxidic material. Examples of precursors which are particularly suitable in this respect include acid-peptised aluminium trihydrate, silicic acid, and compounds like titanium lactate, and an ammonium salt of lactic acid titanate chelate, such as Tyzor® obtainable from DuPont.

Accordingly, in one embodiment the fibrous aggregate is provided with a precursor for an oxide selected from alumina, silica, zirconia, titania, gallia, ceria, or a combination thereof. In another embodiment, the fibrous aggregate is provided with an oxide selected from alumina, silica, zirconia, titania, gallia, ceria, or a combination thereof.

Further oxides encompass catalytically active oxides, which for the purposes of the present invention are divided into catalytically active metal components catalytically active particulate material such as molecular sieves, including zeolites.

Suitable catalytically active metal components include (components of) the non-noble metals of Group VIII of the periodic table of elements (CAS Version), more in particular iron, cobalt, and nickel, metals of Group VIB of the periodic table of elements, more in particular chromium, molybdenum, and tungsten, metals of Group VIIB of the periodic table of elements, more in particular manganese. In one embodiment, the fibrous aggregate is provided with an oxide or a precursor therefor of a non-noble metal of Group VIII, of a metal of Group VIB or a metal of Group VIIB. Suitable precursors for these types of metals are those known in the art for the manufacture of catalysts and include salts and complexes.

The molecular sieves suitable for use in this invention encompass the molecular sieves known in the art of catalysis. Suitable molecular sieves include ZSM-5 and other ZSM-type sieves, and zeolites like zeolite beta, zeoliet X, and zeolite Y. Combinations of various types of materials may also be used.

The various materials can be combined in different configurations. In one embodiment, the fibrous aggregate is provided with a precursor for an oxide selected from alumina, silica, zirconia, titania, gallia, ceria, or a combination thereof, whether or not in combination with an oxide selected from alumina, silica, zirconia, titania, gallia, ceria, molecular sieves, or a combination thereof.

In another embodiment, a precursor for an oxide selected from alumina, silica, zirconia, titania, gallia, ceria, or a combination thereof, is provided, whether or not in combination with an oxide or a precursor therefor of a non-noble metal of Group VIII, of a metal of Group VIB or a metal of Group VIIB.

Catalytically active particulate materials such as molecular sieves may be applied to the carrier in the same way as described above for the oxidic material. In a preferred embodiment a dispersion is used comprising a combination of a particulate molecular sieve and a precursor of an oxidic carrier. For example, a dispersion may be used comprising a particulate molecular sieve in combination with a carrier precursor which acts as adhesive for the particulate material. For examples of precurors particularly suitable as adhesives reference is made to what is stated above.

The next step in the process according to the invention is subjecting the coated fibrous aggregate obtained as above to a drying step. In a first step, where necessary, excess liquid medium may be removed from the mould. Then, the coated fibrous aggregate is subjected to a drying step, e.g., at a temperature of 100-200 C, for a period of 0,5-48 hours.

By the application of a oxide or a precursor therefor, a coated fibrous aggregate is formed. In the context of the present specification the word coated should not be interpreted as requiring that the entire surface of all fibers is provided with oxide or precursor.

The drying step may ensure sufficient cohesion between the fibers to allow removal of the dried fibrous aggregate from the mould. However, it is preferred, however, to subject the dried coated fibrous aggregate to a calcination step before it is removed from the mould, as this will improve the cohesion between the fibers. Suitable calcination conditions include a temperature of 200-900°C, in particular 450-900°C in air for a period of 0,5-10 hours. Then, the thus obtained catalyst substrate may be removed from the mould. Alternatively, it is also possible to remove the dried coated fibrous aggregate from the mould, and subject it to a calcination step after removal from the mould.

If so desired, further materials may be incorporated into the coated fibrous aggregate after calcination thereof, whether before of after removal from the mould. More specifically, in one embodiment the calcined coated fibrous aggregate is provided with one or more of catalytically active metals of Group VIII, Group VIB, Group VIIB or precursors therefor, or oxides selected from alumina, silica, zirconia, titania, gallia, ceria, molecular sieves, and precursors therefor, followed by subjecting the fibrous aggregate to a drying step, and optionally a calcination step. Incorporation of these further components can be effected by contacting the calcined coated fibrous aggregate with the material to be added thereto, e.g., in the form of an aqueous solution or dispersion, followed, if so desired, by a calcination step to convert the precursor into a catalytically active material.

As will be clear to the skilled person, all kinds of sequential treatments are possible, as long as an intermediate calcination step is carried out.

In one embodiment, (further) catalytically active material, in particular metal components are incorporated into the calcined coated fibrous aggregate, therewith forming a catalyst. Suitable catalytically active material may encompass catalytically active metal components, or other catalytically active materials such as molecular sieves, including zeolites. Suitable catalytically active metal components include (components of) the noble and non-noble metals of Group VIII of the periodic table of elements (CAS Version), more in particular iron, cobalt, nickel, platinum and palladium, metals of Group VIB of the periodic table of elements, more in particular chromium, molybdenum, and tungsten, metals of Group VIIB of the periodic table of elements, more in particular manganese.

The catalytically active metal component will generally be applied onto the substrate by contacting the substrate with an aqueous solution or dispersion of a salt of an active metal component precursor, followed by removal of the aqueous medium. The catalyst substrate provided with the aqueous medium may then be subjected to a calcination step and optionally, depending on the nature of the metal, a reduction step. In a calcination step, performed, for example at a temperature of 300-700°C, the metal salt is converted to the metal oxide. After a reduction step, the metal component is converted to its metallic form.

As indicated above, the various components can be applied to the substrate simultaneously, for example by combining catalytically active materials or precursors with the oxide or precursors therefor when they are applied onto the fibrous aggregate or the catalyst substrate.

However, especially where a catalytically active metal component is used, it is sometimes preferred for reasons of process control, to first provide the fibrous aggregate with an oxidic material, and then, after a calcination step, provide the coated fibrous aggregate substrate with the catalytically active metal component or precursor therefor, for example via impregnation.

The present invention also pertains to a coated fibrous substrate comprising non-woven fibers with an average length in the range of 4-50 mm, an average diameter in the range of 5-300 microns, and a length over diameter ratio in the range of 50 to 500, wherein the fibers are adhered to each other via an oxidic component or a precursor therefor. In a preferred embodiment the fibers are adhered to each other via an oxidic component. In one embodiment, the coated fibrous aggregate comprises one or more of catalytically active metal components of Group VIII, Group VIB, Group VIIB or precursors therefor, oxides selected from alumina, silica, zirconia, titania, gallia, ceria, molecular sieves, and precursors therefor. In particular, the coated fibrous aggregate comprises one or more of catalytically active metals of Group VIII, Group VIB, Group VIIB or precursors therefor. The coated fibrous aggregates of the present invention can suitably be prepared by the methods described above.

The calcined coated fibrous aggregate preferably comprises one or more oxides selected from alumina, silica, zirconia, titania, gallia, ceria, and molecular sieves, whether or not in combination with one or more of catalytically active metal components of Group VIII, Group VIB, Group VIIB.

The amount of material present on the coated fibrous aggregate may vary within broad ranges. In general, the material makes up at least 0.5 vol.% of the final coated fibrous aggregate. As an upper level, a value of at most 40 vol. % may be mentioned. More in particular, it may make up between 1 and 20 vol.% of the coated fibrous aggregate, still more in particular between 5 and 15 vol.%. The volume of the coated fibrous aggregate is the outer volume.

In one embodiment, the coated fibrous aggregate may comprise 1-20 vol.% of fibers, in particular 1-10 vol.%, more in particular 3-8 vol.%. Here, the fibers are the fibers from which the fibrous aggregate was prepared, excluding the oxide which keeps them together.

The coated fibrous aggregate of the present invention, whether dried or calcined, can have a very high void fraction. In one embodiment, the void fraction is at least 60%, more in particular at least 70%, still more in particular at least 80%. An upper limit for the void fraction of 99% may be mentioned. The void fraction is determined from the density of the coated fibrous aggregate as compared to the density of the material from which the substrate fibers are prepared using the following formula:

```
void fraction = [1 - (substr. density/mater. density)]*100%
```

The catalysts and catalyst substrates in accordance with the present invention can have a very large geometric surface area. This makes the catalyst substrates very suitable for use in catalytic processes where the reaction rate is limited by mass transfer, such as Fischer-Tropsch, hydrocracking, denox, flameless combustion, and alkylation. In one embodiment, the geometric surface area of catalyst substrates according to the invention is at least 500 $m^2/m^3$, more in particular at least 1000 $m^2/m^3$. The upper limit of the geometric surface area is not critical to the present invention. Values up to 8000 $m^2/m^3$ and more may be obtained.

The catalyst substrates and the catalysts according to the invention generally have a size of at least 0.5 $cm^3$. The maximum size is not critical, and will depend on the application of the catalyst, and on considerations like ease of handling, size and shape of the unit, etc. As a maximum value a size of 5 $m^3$ may be mentioned.

In one embodiment, the catalyst substrate has a volume in the range of 0.5-200 $cm^3$. Catalyst substrates within this volume range may for example be used for manufacturing fixed bed or moving bed catalyst particles. In another embodiment, the catalyst substrate has a volume in the range of 200 $cm^3$ to 5 $m^3$. For shaped reactor filling substrates, a volume range of 0.05-5 $m^3$ may be mentioned.

The catalyst substrate described herein is especially suitable as a substrate for a catalyst used in diffusion-limited reactions most especially the Fischer-Tropsch reaction, but also hydrocracking, oxidative desulphurisation, denox, flameless combustion, alkylation, and hydrotreating, including hydrogenation, hydrodesulphurisation, hydrodentitrogenation, hydrodemetallistaion, and hydrodearomatisation.

Catalysts used in the Fischer-Tropsch synthesis often comprise a substrate material and one or more metals from Group VIII of the Periodic Table, especially from the cobalt and iron groups, optionally in combination with one or more metal oxides and/or metals as promoters selected from zirconium, titanium, chromium, vanadium and manganese, especially manganese. A Fischer-Tropsch catalytically active metal or precursor preferably includes a metal such as cobalt, iron, nickel and ruthenium, more preferably cobalt. The catalytically active metal may be present in the catalyst together with one or more metal promoters or co-catalysts. The promoters may be present as metals or as the metal oxide, depending upon the particular promoter concerned. Suitable promoters include oxides of metals from Groups IA, IB, IVB, VB, VIB and/or VIIB of the Periodic Table, oxides of the lanthanides and/or the actinides. Preferably, the catalyst comprises at least one of an element in Group IVB, VB and/or VIIB of the Periodic Table, in particular titanium, zirconium, maganese and/or vanadium. As an alternative or in addition to the metal oxide promoter, the catalyst may comprise a metal promoter selected from Groups VIIB and/or VIII of the Periodic Table. Preferred metal promoters include rhenium, platinum and palladium. A most suitable catalyst comprises cobalt as the catalytically active metal and zirconium as a promoter. Another most suitable catalyst comprises cobalt as the catalytically active metal and manganese and/or vanadium as a promoter.

Catalysts suitable for use in hydrocracking often comprise as catalytically active metal or precursor one or more metals selected from Groups VIB and VIII of the Periodic Table of Elements. Preferably, the hydrocracking catalysts contain one or more noble metals from Group VIII. Preferred noble metals are platinum, palladium, rhodium, ruthenium, iridium and osmium. Most preferred catalysts for use in the hydrocracking stage are those comprising platinum. In a hydrocracking catalyst, it may be preferred to provide the catalyst substrate with alumina, silica, silica-alumina, or titania as oxidic material. For a hydrocracking catalyst it may be preferred to combine a catalytically active metal as described above with a molecular sieve, for example a zeolite, for a particular example a Y zeolite.

For alkylation the catalyst may, for example contain as catalytically active material a molecular sieve, for example one or more of zeolite Y, zeolite beta, or ZSM-5, optionally in combination with an active metal component.

For hydrotreating of hydrocarbon feeds, encompassing one or more of hydrogenation, hydrodesulphurisation, hydrodenitrogenation, hydrodemetallisation, or hydrodearomatisation, a suitable catalyst may encompass an oxidic carrier, for example comprising silica, alumina, titania, or combinations thereof, in particular alumina, in combination with an active metal component comprising a combination of a Group VIB metal component, in particular molybdenum and/or tungsten, more in particular molybdenum, with a Group VIII non-noble metal component, in particular cobalt and/or nickel.

For denox a suitable catalyst may comprise vanadium a catalytically active material and titania as oxidic carrier.

In one embodiment, the material of the fibers acts as catalytically active material. For example, for flameless combustion a catalyst may be prepared comprising titania as oxidic component on a substrate comprising copper fibers. In this case the copper fibers act as catalytically active material.

The present invention also pertains to the use of a catalyst comprising a catalyst substrate described above in catalysing a diffusion limited reaction. The diffusion-limited reaction may for example be selected from the Fischer-Tropsch reaction, hydrocracking, oxidative desulphurisation, denox, flameless combustion, and alkylation. It is considered particularly suitable for catalysing Fischer-Tropsch reactions.

The invention also pertains to a process for performing a diffusion limited reaction wherein a feedstock is contacted under reaction conditions with a catalyst comprising a catalyst substrate as described above.

In one embodiment, the invention also provides a process for the production of liquid hydrocarbons which comprises providing a feed comprising CO and H2 to a reactor comprising a Fischer-Tropsch catalyst, the reactor being at reaction temperature and pressure, and withdrawing an effluent from the reactor, the catalyst comprising one or more metals from Group VIII of the Periodic Table metal of Elements, and a refractory oxide on a catalyst substrate, the substrate being a substrate as described above.

The reactor used in the Fischer-Tropsch process according to the invention may be an immobilised slurry reactor, an ebullating bed reactor or a multitubular fixed bed reactor, preferably an immobilised slurry reactor.

The Fischer-Tropsch reaction is preferably carried out at a temperature in the range from 125 to 400 °C, more preferably 175 to 300 °C, most preferably 200 to 260 °C. The gaseous hourly space velocity may vary within wide ranges and is typically in the range from 500 to 10000 Nl/l/h, preferably in the range from 1500 to 4000 Nl/l/h. The hydrogen to CO ratio of the feed as it is fed to the catalyst bed generally is in the range of 0.5:1 to 2:1.

In one embodiment the feed is provided to the reactor in the form of a mixture of hydrogen and CO, for example in the form of a syngas feed. In another embodiment, the hydrogen and CO are provided to the reactor in different streams.

Products of the Fischer-Tropsch synthesis may range from methane to heavy hydrocarbons. Preferably, the production of methane is minimised and a substantial portion of the hydrocarbons produced have a carbon chain length of a least 5 carbon atoms. Preferably, the amount of C5+ hydrocarbons is at least 60% by weight of the total product, more preferably, at least 70% by weight, even more preferably, at least 80% by weight, most preferably at least 85% by weight. The CO conversion of the overall process is preferably at least 50%.

The products obtained via the process according to the invention can be processed through hydrocarbon conversion and separation processes known in the art to obtain specific hydrocarbon fractions. Suitable processes are for instance hydrocracking, hydroisomerisation, hydrogenation and catalytic dewaxing. Specific hydrocarbon fractions are for instance LPG, naphtha, detergent feedstock, solvents, drilling fluids, kerosene, gasoil, base oil and waxes.

In one embodiment it may be preferred to treat the catalyst of the present invention with a wax before providing it to the Fischer-Tropsch reactor. Treating the particles with a wax may serve to facilitate handling, transport, and installation of the particles by improving the strength of the particles. The wax may be incorporated into the catalyst substrate by combining the substrate with liquified wax, e.g., through dipping or impregnation, optionally removing excess wax, and allowing the wax remaining on the particles to solidify. Suitable waxes include those which are substantially non-tacky below a temperature of about 40°C. For more information on this embodiment, reference is made to what is stated in EP 2 000 207.

The present invention also pertains to a catalytic hydrocracking reaction in which a hydrocarbon feed is contacted under hydrocracking reaction conditions with a catalyst comprising a Group VIII metal component on a catalyst substrate, the substrate being a catalyst substrate as described above.

Suitable conditions for the catalytic hydrocracking are known in the art. Typically, the hydrocracking is effected at a temperature in the range of from about 175 to 400 °C. Typical hydrogen partial pressures applied in the hydrocracking process are in the range of from 10 to 250 bar.

**Claims**

1.  Process for manufacturing a coated fibrous aggregate comprising the steps of providing fibers into a mould to form a fibrous aggregate, the fibers having an average length in the range of 4-50 mm, an average diameter in the range of 5-300 microns, and a length over diameter ratio in the range of 50 to 500, providing an oxide or a precursor therefor to the fibrous aggregate, subjecting the coated fibrous aggregate to a drying step, and removing the coated fibrous aggregate from the mould.

2.  Process according claim 1, wherein the fibrous aggregate is provided with a precursor for an oxide selected from alumina, silica, zirconia, titania, gallia, ceria, or a combination thereof.

3.  Process according to claim 1 or 2, wherein the fibrous aggregate is provided with an oxide selected from alumina, silica, zirconia, titania, gallia, ceria, molecular sieves, or a combination thereof.

4.  Process according to any one of the preceding claims, wherein the fibrous aggregate is provided with an oxide or a precursor therefor of a non-noble metal of Group VIII, of a metal of Group VIB or a metal of Group VIIB.

5.  Process according to any one of the preceding claims, wherein the dried coated fibrous aggregate is subjected to a calcination step before it is removed from the mould.

6.  Process according to any one of claims 1 through 4, wherein the dried coated fibrous aggregate is subjected to a calcination step after it has been removed from the mould.

7.  Process according to claim 5 or 6 wherein the calcined coated fibrous aggregate is provided with one or more of catalytically active metals of Group VIII, Group VIB, Group VIIB or precursors therefor, oxides selected from alumina, silica, zirconia, titania, gallia, ceria, molecular sieves, and precursors therefor, followed by subjecting the fibrous aggregate to a drying step.

8.  Process according to claim 7, wherein the calcined coated fibrous aggregate is provided with one or more of catalytically active metals of Group VIII, Group VIB, Group VIIB or precursors therefor.

9.  Process according to claim 7 or 8, wherein the dried fibrous aggregate is subjected to a calcination step.

10. Coated fibrous substrate comprising non-woven fibers with an average length in the range of 4-50 mm, an average diameter in the range of 5-300 microns, and a length over diameter ratio in the range of 50 to 500, wherein the fibers are adhered to each other via an oxidic component or a precursor therefor.

11. Coated fibrous aggregate according to claim 10, wherein the fibers are adhered to each other via an oxidic component.

12. Coated fibrous aggregate according to claim 10 or 11 which comprises one or more of catalytically active metals of Group VIII, Group VIB, Group VIIB or precursors therefor, oxides selected from alumina, silica, zirconia, titania, gallia, ceria, molecular sieves, and precursors therefor.

13. Coated fibrous aggregate according to claim 12, which comprises one or more of catalytically active metals of Group VIII, Group VIB, Group VIIB or precursors therefor.

14. Use of a coated fibrous aggregate according to claim 13 as catalyst in a diffusion limited reaction.

15. Use according to claim 14, wherein the diffusion-limited reaction is selected from the Fischer-Tropsch reaction, hydrocracking, oxidative desulphurisation, denox, flameless combustion, alkylation, hydrotreating, including hydrogenation, hydrodesulphurisation, hydrodenitrogenation, hydrodearomatisation, and hydrodemetallisation, in particular a Fischer-Tropsch reaction.

Europäisches
Patentamt

European
Patent Office

Office européen
des brevets

# EUROPEAN SEARCH REPORT

**Application Number**

EP 09 17 9424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 769 240 A (LEW S ET AL) 30 October 1973 (1973-10-30) * abstract; claims * * column 5, line 8 - column 6, line 60 * * column 7, line 17 - line 30 * * table I * | 1-15 | INV. B01J23/75 B01J35/06 B01J37/02 C07C1/04 C10G2/00 |
| X | ANDERSEN O ET AL: "Melt extracted fibres boost porous parts" METAL POWDER REPORT, MPR PUBLISHING SERVICES, SHREWSBURY, GB, vol. 54, no. 7-8, 1 July 1999 (1999-07-01) , pages 30-34, XP004289572 ISSN: 0026-0657 * page 30 * * Section "Properties of components"; page 32 * * Section "Applications"; page 33; tables * | 1-14 | |
| X | DE 102 12 586 A1 (UNIV SCHILLER JENA [DE]; FRAUNHOFER GES FORSCHUNG [DE]) 2 October 2003 (2003-10-02) * paragraph [0016] - paragraph [0018] * * claims; example 2 * | 1-15 | TECHNICAL FIELDS SEARCHED (IPC) B01J B22F C07C C10G |
| X | WO 02/07872 A1 (SHELL INT RESEARCH [NL]; GIMPEL FREDERIK WILLEM HENDRIK [NL]; HARDEVEL) 31 January 2002 (2002-01-31) * page 4, line 17 - line 23 * * page 6, line 15 - line 34 * * claims; examples * | 1-15 | |
| X | US 3 231 520 A (LEAK ROBERT J ET AL) 25 January 1966 (1966-01-25) * column 4, line 3 - line 23 * * column 5, line 3 - line 15 * * column 6, line 1 - line 3 * * claims; examples * | 1-15 | |

The present search report has been drawn up for all claims

| Place of search | Date of completion of the search | Examiner |
|---|---|---|
| Munich | 17 June 2010 | Besselmann, Sonja |

EPO FORM 1503 03.82 (P04C01)

## ANNEX TO THE EUROPEAN SEARCH REPORT
## ON EUROPEAN PATENT APPLICATION NO.

EP 09 17 9424

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2010

| Patent document cited in search report | | | Publication date | Patent family member(s) | | | Publication date |
|---|---|---|---|---|---|---|---|
| US 3769240 | A | | 30-10-1973 | NONE | | | |
| DE 10212586 | A1 | | 02-10-2003 | NONE | | | |
| WO 0207872 | A1 | | 31-01-2002 | AR | 029961 | A1 | 23-07-2003 |
| | | | | AU | 8760301 | A | 05-02-2002 |
| | | | | AU | 2001287603 | B2 | 25-11-2004 |
| | | | | CA | 2416459 | A1 | 31-01-2002 |
| | | | | MX | PA03000662 | A | 15-10-2003 |
| | | | | NO | 20030371 | A | 20-03-2003 |
| | | | | NZ | 523660 | A | 30-07-2004 |
| | | | | ZA | 200300334 | A | 31-03-2004 |
| US 3231520 | A | | 25-01-1966 | NONE | | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006037776 A
- US 5027886 A
- DE 19711764
- DE 10000097
- EP 2000207 A